# FASCICULE DE BREVET EUROPEEN

(11) **EP 0 557 158 B1**
(45) Date de publication et mention de la délivrance du brevet: **24.04.1996**
(21) Numéro de dépôt: 93400321.1
(22) Date de dépôt: 09.02.1993
(51) Int. Cl.: B29C 70/38

(54) **Dispositif et procédé pour realiser une pièce de structure complexe par dépose au contact de fil ou ruban**
Vorrichtung und Verfahren zur Herstellung eines Formteils mit einer komplexen Struktur durch Kontaktauflegen eines Fadens oder Bandes
Apparatus and method for making a complex structured object by contact application of yarn or tape

(30) Priorité: 17.02.1992 FR 9201747
(43) Date de publication de la demande: 25.08.1993
(73) Titulaire: AEROSPATIALE Société Nationale Industrielle, F-75781 Paris Cédex 16 (FR)
(72) Inventeur: Darrieux, Jean-Louis, F-33160 Saint Medard en Jalles (FR)
(74) Mandataire: Lhuillier, René

(56) Documents cités:
- EP-A- 0 361 828
- GB-A- 2 132 134
- US-A- 4 679 291
- US-A- 4 909 880

## Description

L'invention qui porte sur un dispositif et des procédés pour réaliser une pièce de structure complexe par dépose au contact de fil ou ruban sur une forme concerne plus précisément l'agencement des galets de dépose et d'entraînement du fil de la tête de dépose.

Le dispositif permet de réaliser des pièces de section complexe et de grande dimension notamment des pièces semblables à celles d'alliage léger réalisées en tôlerie d'aviation, c'est-à-dire des tôles renforcées par des nervures, en matériaux composites à trois directions devant résister à des contraintes mécaniques et thermiques en ambiance oxydante. Ces structures, issues de pièces préfabriquées fibrées maintenues en formes par un liant et assemblées lors de la mise en place de la troisième direction, sont rigidifiées dans un moule afin d'obtenir la géométrie finale de la pièce, puis si nécessaire, usinées aux formes et dimensions désirées.

Il existe un grand nombre de techniques qui permettent de réaliser des plaques planes ou bombées formées de couches en plans parallèles obtenues par fibrage en deux dimensions, techniques qui utilisent des fils ou des fibres préimprégnés, supportés par une bande de continuité et d'isolation des couches, bande qui doit être retirée lors de la dépose du fil et rebobinée derrière la tête de dépose. Le fil est entraîné par la bande de continuité qui est elle-même entraînée par un galet de dépose motorisé en rotation. Pour réaliser la troisième direction, c'est-à-dire pour introduire des fibres transversales au travers de substrats superposés, les techniques connues utilisent un grand nombre d'épingles qui aident à maintenir les fibres transversales et qui doivent ensuite être retirées.

Ces techniques connues présentent un certain nombre d'inconvénients. En premier lieu, la nécessité de réaliser la mise en place d'un fil sur une bande support, puis de stocker l'ensemble sur des bobines en forme de disque, limite la quantité de fil stocké, et leurs dimensions encombrent la tête de dépose. En outre la motorisation d'un galet de contact représente une complication dans la réalisation d'une tête de dépose. Et puis on sait que les opérations de préimprégnation du fil interdisent l'emploi de certaines matrices résines. Enfin l'usage des épingles s'avère génant lors de la mise en place de la troisième direction.

Dans le but notamment d'éviter ces inconvénients en vue d'obtenir plus aisément des structures complexes dont les fibrages des pièces élémentaires non tissées sont disposés suivant des directions voulues afin d'obtenir les caractéristiques mécaniques optimales, l'invention propose un dispositif qui permet de réaliser des structures complexes comportant des petits rayons de courbure nécessités en particulier par le besoin de renforts locaux et cela, sans utiliser d'épingles. On peut obtenir par exemple une tôle nervurée dont la troisième direction sert à lier les pièces fibrées préfabriquées en deux directions par dépose de fil au contact. L'invention permet de réaliser des pièces complexes dont les fibrages des pièces élémentaires non tissées sont disposés suivant des directions voulues afin d'obtenir les caractéristiques mécaniques optimales. On peut aussi obtenir des structures assemblées avec du liant, permettant la manipulation des substrats préfabriqués et assemblés avant rigidification définitive.

Un objet principal de la présente invention consiste donc en un dispositif pour réaliser une pièce de structure complexe par dépose au contact de fil ou ruban sur une forme, utilisant une tête de dépose montée sur un outil faisant partie d'une machine distributrice de fils, ladite tête de dépose étant équipée d'une pluralité de galets dont au moins un galet d'entraînement et une roulette de dépose, dispositif selon lequel le galet d'entraînement du fil et la roulette de dépose sont couplés entre eux par un pignon intermédiaire qui peut être rétracté pour les désolidariser l'un de l'autre, ladite tête de dépose étant mobile en translation par rapport à l'interface tête-machine distributrice, des moyens complémentaires fournissant une pression variable de la tête de dépose sur la forme.

Selon une caractéristique préférentielle de l'invention, la roulette de dépose est décalée par rapport à l'axe de rotation de la tête de dépose. Selon d'autres caractéristiques préférentielles de l'invention, le fil contourne le galet d'entraînement contre lequel il est plaqué par deux galets presseurs et le galet d'entraînement et la roulette de dépose portent chacun respectivement un pignon entraîné par ledit pignon intermédiaire qui se déplace sur une rampe sous l'action d'un vérin.

En outre une crémaillère entraînée par un vérin est prévue en amont du galet-presseur pour l'injection du fil, et une lame de coupe se déplace préférentiellement dans la même direction que le pignon intermédiaire entre la roulette de dépose et le galet d'entraînement.

Selon une autre caractéristique préférentielle de l'invention l'interface tête-machine distributrice est constituée par une platine-support montée à rotation libre sur l'axe de l'outil faisant partie de la machine distributrice, ledit outil servant de support à une bobine distributrice du fil qui tourne librement sur lui et qui est équipée d'un frein réglable.

Le fil émis par la bobine traverse l'outil par un puits central pour atteindre la tête de dépose.

Avantageusement, le moyen complémentaire est un ressort en appui sur la platine-support et sur la tête de dépose pour faire coulisser cette dernière en direction de la pièce à recouvrir.

Un autre objet de l'invention consiste en un procédé pour réaliser une structure complexe en matériau composite mettant en oeuvre le dispositif, lequel procédé consiste :
- à réaliser une pièce élémentaire à deux directions par dépose d'une première couche de fil sec au contact sur une forme enduite d'un liant, la première couche ainsi réalisée étant complétée par au moins une autre couche de liant et de fil déposé dans une autre direction jusqu'à l'obtention de l'épaisseur de la pièce élémentaire voulue,
- à effectuer sur la pièce élémentaire un pîquage de fils de même nature dans une troisième direction, avant l'imprégnation de résine et le durcissement du liant.

Le procédé consiste également, selon une autre variante de l'invention :
- à réaliser au moins deux pièces élémentaires à deux directions par dépose d'une première couche de fil sec au contact sur une forme enduite d'un liant, la première couche ainsi réalisée étant complétée par au moins une autre couche de liant et de fil déposé dans une autre direction jusqu'à l'obtention de l'épaisseur des pièces élémentaires voulues.
- à superposer les pièces élémentaires obtenues sur un support en mousse, et
- à lier entre elles les pièces élémentaires par la mise en place de fils de même nature dans une troisième direction, avant l'imprégnation de résine et le durcissement du liant.

D'autres caractéristiques et avantages de l'invention apparaîtront à la lecture de la description qui va suivre dans laquelle il est fait référence aux dessins annexés qui représentent :
Figure 1 une vue en coupe verticale de la tête de dépose et de l'outil.
Figure 2 une variante de réalisation de la tête de dépose selon la figure 1.
Figure 3 une vue schématique en élévation des détails de la tête de dépose
Figures 4 à 8 des vues schématiques de la tête de dépose selon la figure 2 durant les phases successives de fonctionnement.
Figures 9 à 10 des exemples de déposes effectuées
Figure 11 une vue en persperctive d'une tête de dépose de fil sur un demi renfort
Figures 12 à 14 des exemples de réalisation d'assemblage de pièces élémentaires
Figure 15 une vue générale de la machine de dépose.

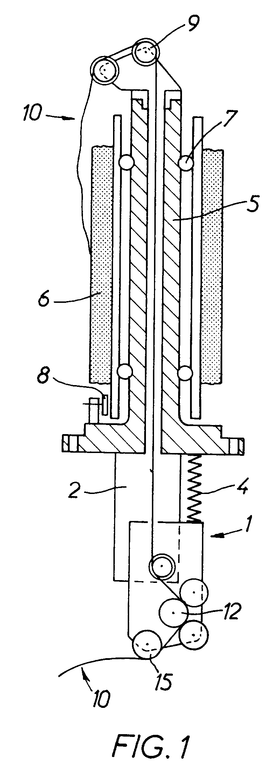

On voit à la figure 1 une tête de dépose désignée dans son ensemble par la référence 1. Elle est montée coulissante sur une glissière 2 elle-même solidaire d'un outil 5 et un ressort 4 agit sur la tête dans le sens de la flèche pour exercer une pression sur la forme à recouvrir. La surface contre laquelle s'appuie le ressort constitue l'interface entre la tête de dépose 1 et l'outil qui fait partie de la machine distributrice de fil. L'outil en question sert de support à une bobine 6 distributrice d'un fil 10, qui peut tourner libre.ment sur l'outil grâce à des roulements 7. Un frein réglable 8 peut agir sur la rotation de la bobine. Le fil 10 émis par la bobine est guidé par des poulies de renvoi 9 et traverse l'outil par un puits central pour atteindre la tête de dépose 1.

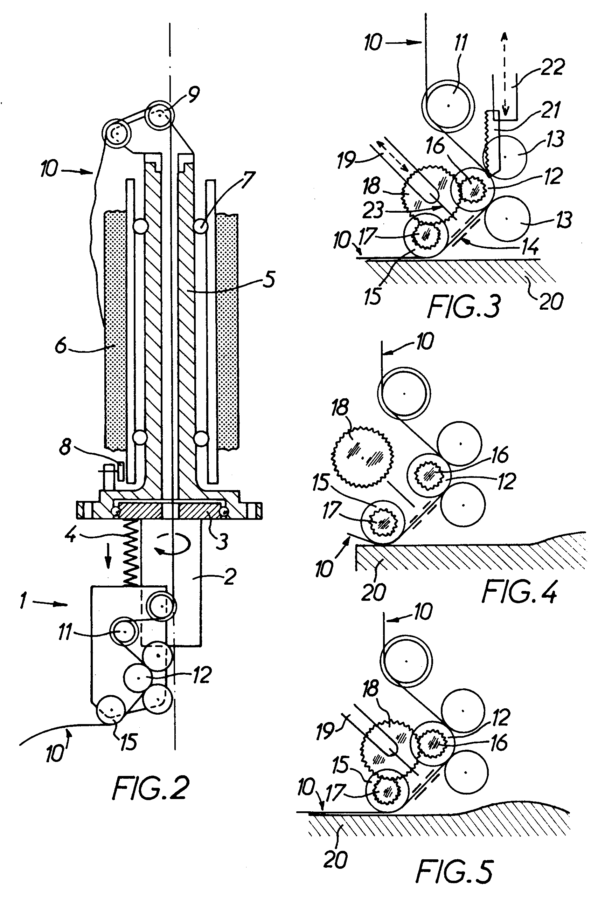

Une variante de réalisation a été représentée à la figure 2, sur laquelle les mêmes éléments portent les mêmes références. Dans cette variante la tête de dépose 1 est décalée par rapport à l'axe de rotation. En outre la glissière 2 est solidaire d'une platine support 3 montée à rotation libre sur l'axe de l'outil 5, ladite platine constituant l'interface entre la tête de dépose et l'outil.

La tête de dépose est représentée plus en détail à la figure 3. Le fil 10 a atteint d'abord une poulie de renvoi 11 qui l'oriente en direction d'un galet d'entraînement 12 qu'il contourne et sur lequel il est plaqué par deux galets presseurs 13. Puis le fil traverse un tube-guide 14 avant de contourner une roulette 15 de dépose au contact destinée à s'appliquer sur la pièce 20 de forme complexe. Dans le cas de la variante de la figure 2, la roulette de dépose 15 est décalée par rapport à l'axe de rotation de la tête de dépose 1 qui par ailleurs est montée folle sur l'axe de l'outil. On peut donc utiliser celui-ci sur des machines plus simples, ne possédant pas d'axe de rotation piloté de l'outil.

Le galet d'entaînement 12 porte un pignon 16 et la roulette de dépose 15 porte un pignon similaire 17. Les deux pignons 16 et 17 sont susceptibles d'être couplés par un pignon intermédiaire 18 qui peut se déplacer sur la rampe 19 sous l'action d'un vérin non représenté. En outre il est prévu en amont du galet-presseur une crémaillère 21 pour l'injection du fil dans la tête en début d'opération, laquelle est entraînée par un vérin pneumatique 22. Enfin on a installé une lame de coupe 23 qui se déplace dans la même direction que le pignon intermédiaire 18 entre la roulette de dépose et le galet d'entraînement. La tête de dépose ainsi décrite est donc mobile en translation par rapport à l'interface, ce qui permet au fil d'être plaqué sur la pièce par le ressort 4 qui pousse la tête de dépose, ledit ressort étant plus ou moins bandé pour exercer la pression voulue du fil sur la pièce.

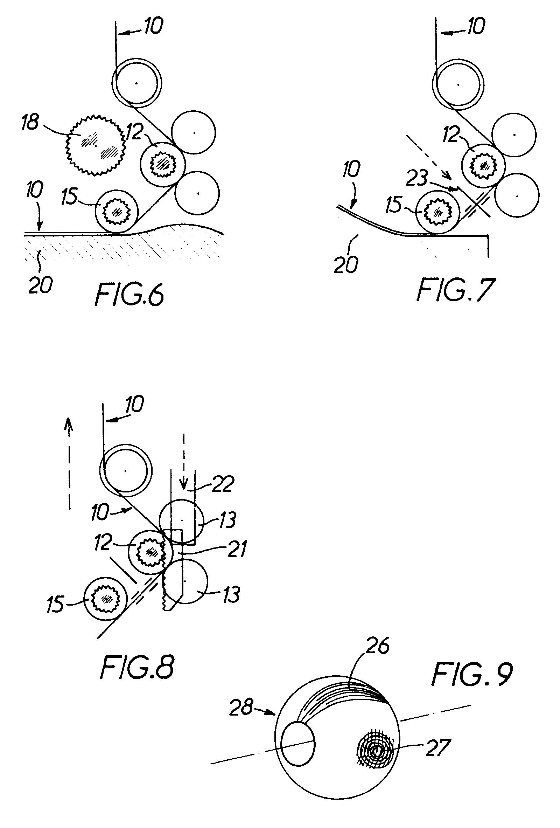

Pour déposer un fil au contact sur un support afin de réaliser une première nappe ou une nappe jointive à la précédente ou un ruban, la première opération consiste à déplacer la tête de dépose 1 avec l'outil porteur 5 jusqu'à ce que la roulette de dépose 15 vienne en butée contre la pièce 20 (figure 4). La partie de fil 10 qui dépasse de la roulette et qui n'est pas plaquée sur la pièce, le sera lors du retour de la tête quand elle déposera au contact la nappe jointive suivante. La descente de l'outil est arrêtée et la tête est appliquée sur la pièce sous l'action du ressort 4. Dans cette position le pignon intermédiaire 18 est à l'écart des pignons 16 et 17 qui ne sont pas couplés. Pour assurer la dépose au contact il convient d'embrayer ce pignon intermédiaire 18 -Comme on le voit à la figure 5- en le faisant déplacer sur la rampe 19 pour qu'il couple à l'aide des pignons 16 et 17, le galet d'entraînement 12 et la roulette de dépose 15. La pièce 20 étant entraînée en rotation, la roulette de dépose 15 roule sur sa surface et entraîne par conséquent le galet 12 qui tire le fil. Au bout d'une certaine longueur de fil collé sur la pièce, il n'est plus nécessaire de tirer le fil par le galet 12 puisque celui-ci est suffisamment accroché à la pièce pour être entraîné par elle. On peut donc débrayer le pignon intermédiaire 18 (figure 6).

Il est ainsi possible de déposer du fil sur une forme complexe, convexe ou concave. La figure 7 montre qu'après la dépose au contact du fil 10, la lame de coupe 23 entre en action pour le couper et l'on comprend que la partie restante du fil entre la lame et la roulette de dépose 15 sera plaquée par cette dernière, sur la pièce.

L'opération de dépose étant terminée, on remontera la tête de dépose dans le sens de la flèche (figure 8) puis à l'aide de la crémaillère 21 actionnée par le vérin 22, on injectera si nécessaire un nouveau fil 10 entre le galet d'entraînement 12 et les galets presseur 13. La tête de dépose est prête pour déposer au contact, par exemple une nappe jointive à la précédente.

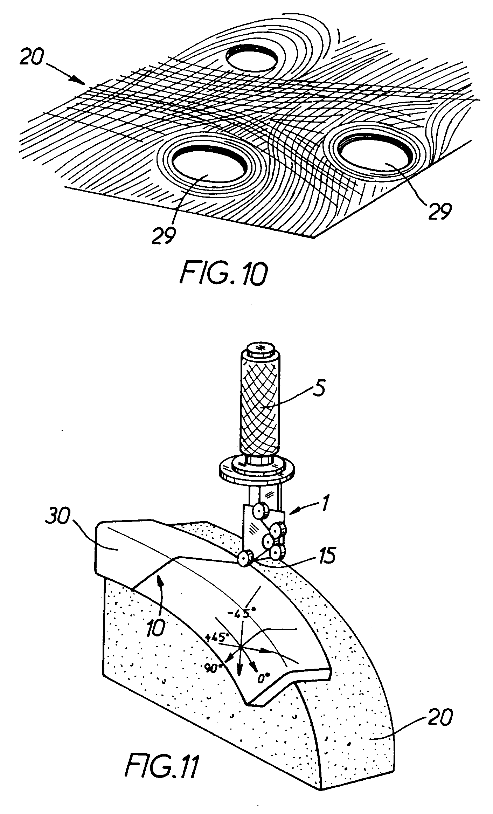

La possibilité de démarrer et d'arrêter la dépose d'un fil permet de réaliser des couches non développables avec des motifs découlant des surfaces des formes complexes. Ainsi peut-on déposer des portions 26 de trajectoires et des zones renforcées 27 sur un support 28 de forme sphérique (figure 9). D'une façon générale on peut combiner toute sorte de déposes sur des formes variées. Cette technique est particulièrement intéressante pour obtenir sur un support 20 de forme quelconque des portions de trajectoires complexes qui permettent par exemple d'éviter mais aussi de renforcer des zones comportant des trous 29 comme le montre la figure 10.

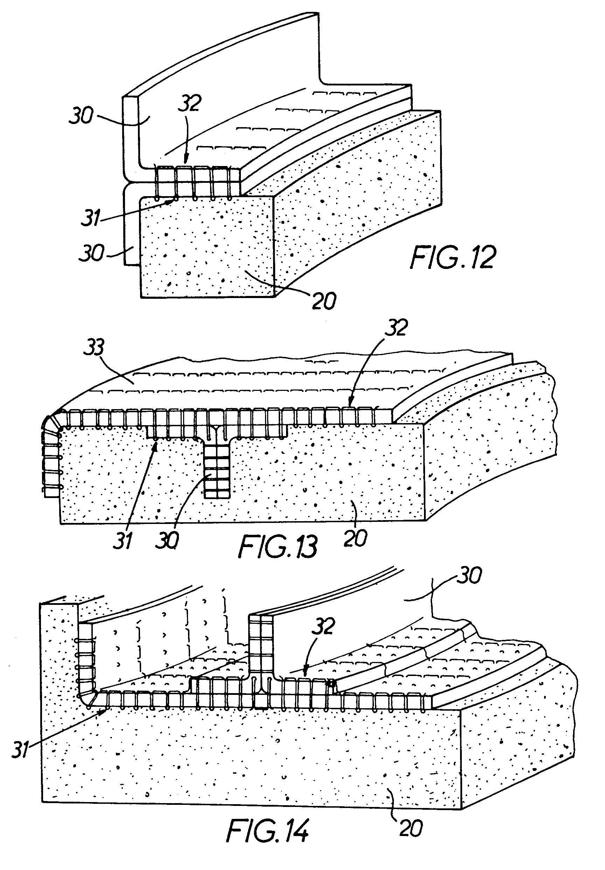

La pièce représentée à la figure 11 est un demi-renfort 30 réalisé par superposition de fils jointifs sur un support en mousse 20. Il est obtenu grâce à la tête de dépose 1 précédemment décrite, montée sur l'outil 5. On remarque que le fil 10 déposé par la roulette 15 peut être plaqué selon des directions différentes à chaque couche, par exemple 0°, 90°, ± 45°. De la même façon on peut réaliser un demi-renfort symétrique au précédent au dessus de l'arête opposée de support en mousse.

Deux demi-renforts 30 ainsi obtenus peuvent être reliés entre eux comme le montre la figure 12. Pour cela des piquages de fil constituant la troisième direction forment des bouclettes 31 dans la mousse rigide et des pontages 32 sur un demi-renfort. On peut effectuer la même opération en retournant la pièce pour obtenir ces pontages des deux cotés des pièces élémentaires. On réalise ainsi une pièce en T constituant un renfort dont l'âme est déjà en trois directions. Dans le cas où les ailes des renforts 30 ne seraient pas liées à une autre pièce, on prévoit de les piquer également pour réaliser le troisième direction.

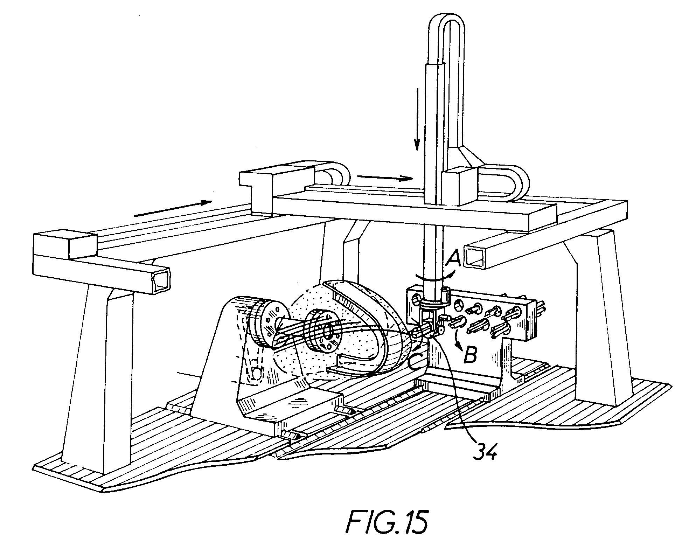

Par dépose de fil au contact, on peut aussi réaliser une peau 33 au dessus de ces deux demi-renforts liés 30, en superposant plusieurs couches de fils jointifs avec des directions différentes à chaque couche (0°, 90°, ± 45°) comme pour la réalisation du demi-renfort. La troisième direction est également constituée de piquages de fils avec bouclettes 31 et pontage 32 comme on le voit à la figure 13. Le piquage est effectué sur la face A de ladite peau 33 et pourrait l'être ensuite par la face B quand la structure aura été retournée, comme le montre la figure 14. Le piquage de cette troisième direction se fera à une profondeur compatible avec l'épaisseur courante de la peau de l'enveloppe ou avec l'épaisseur correspondant à la superposition des renforts. Bien évidemment, il est possible de réaliser la partie "peau" au préalable comme ont été réalisées les pièces de renfort. Un outillage réalisé en différents matériaux en fonction de la nature du liant permet de calibrer, de garantir la géométrie et de donner un bon état de surface à la pièce en matériau composite. Le liant peut être polymérisé afin de rigidifier la pièce. Après rigidification, on retire la pièce de son outillage.

La machine permettant de réaliser les pièces complexes par dépose de fil au contact est avantageusement une machine portique représentée à la figure 15 permettant les trois mouvements linéaires dans les trois directions. En bout du bras portant l'outil un poignet 34 permet trois autres mouvements d'axes rotatifs A, B, C.

La machine permet de réaliser notamment des pièces d'avions ou de navette spatiale et précisément les bords d'attaque desdites pièces soumises à de fortes contraintes mécaniques et thermiques.

## Revendications

1. Dispositif pour réaliser une pièce de structure complexe par dépose au contact de fil ou ruban sur une forme, utilisant une tête de dépose montée sur un outil faisant partie d'une machine distributrice de fils, ladite tête de dépose étant équipée d'une pluralité de galets dont au moins un galet d'entraînement et une roulette de dépose caractérisé en ce que le galet d'entraînement (12) du fil (10) et la roulette de dépose (15) sont couplés entre eux par un pignon intermédiaire (18) qui peut être rétracté pour les désolidariser l'un de l'autre et en ce que ladite tête de dépose (1) est mobile en translation par rapport à l'interface tête-machine distributrice, des moyens complémentaires (4) fournissant une pression variable de la tête de dépose sur la forme.

2. Dispositif selon la revendication 1, caractérisé en ce que la roulette de dépose (15) est décalée par rapport à l'axe de rotation de la tête de dépose (1).

3. Dispositif selon la revendication 1 caractérisé en ce que le fil (10) contourne le galet d'entraînement (12) contre lequel il est plaqué par deux galets presseurs (13).

4. Dispositif selon la revendication 1, caractérisé en ce que le galet d'entraînement (12) et la roulette de dépose (15) portent chacun respectivement un pignon (16) et un pignon (17) entraînés par le pignon intermédiaire (18).

5. Dispositif selon les revendications 1 et 4, caractérisé en ce que le pignon intermédiaire (18) se déplace sur une rampe (19) sous l'action d'un vérin.

6. Dispositif selon la revendication 1, caractérisé en ce qu'une crémaillère (21) entraînée par un vérin (22) est prévue en amont du galet-presseur pour l'injection du fil.

7. Dispositif selon la revendication 1, caractérisé en ce qu'une lame de coupe (23) se déplace préférentiellement dans la même direction que le pignon intermédiaire (18), entre la roulette de dépose et le galet d'entraînement (12).

8. Dispositif selon la revendication 1, caractérisé en ce que l'interface tête-machine distributrice est constitué par une platine-support (3) montée à rotation libre sur l'axe de l'outil (5) faisant partie de la machine distributrice.

9. Dispositif selon la revendication 8, caractérisé en ce que l'outil (5) sert de support à une bobine (6) distributrice du fil (10) qui tourne librement sur lui et qui est équipée d'un frein réglable (8).

10. Dispositif selon les revendications 1, 8 et 9, caractérisé en ce que le fil (10) émis par la bobine traverse l'outil (5) par un puits central pour atteindre la tête de dépose (1).

11. Dispositif selon les revendications 1 et 8, caractérisé en ce que le moyen complémentaire est un ressort (4) en appui sur la platine-support (3) et sur la tête de dépose (1) pour faire coulisser cette dernière en direction de la pièce à recouvrir.

12. Procédé pour réaliser une structure complexe en matériau composite mettant en oeuvre le dispositif selon les revendications 1 à 11, consiste:
- à réaliser une pièce élémentaire à deux directions par dépose d'une première couche de fil sec au contact sur une forme enduite d'un liant, la première couche ainsi réalisée étant complétée par au moins une autre couche de liant et de fil déposé dans une autre direction jusqu'à l'obtention de l'épaisseur de la pièce élémentaire voulue,
- à effectuer sur la pièce élémentaire un piquage de fils de même nature dans une troisième direction, avant l'imprégnation de résine et le durcissement du liant.

13. Procédé pour réaliser une structure complexe en matériau composite mettant en oeuvre le dispositif selon les revendications 1 à 11, consiste:
- à réaliser au moins deux pièces élémentaires à deux directions par dépose d'une première couche de fil sec au contact sur une forme enduite d'un liant, la première couche ainsi réalisée étant complétée par au moins une autre couche de liant et de fil déposé dans une autre direction jusqu'à l'obtention de l'épaisseur des pièces élémentaires voulues,
- à superposer les pièces élémentaires obtenues sur un support en mousse, et
- à lier entre elles les pièces élémentaires par la mise en place de fils de même nature dans une troisième direction, avant l'imprégnation de résine et le durcissement du liant.

14. Procédé selon les revendications 12 et 13 caractérisé en ce que la mise en place des fils dans une troisième direction est assurée par piquage des fils formant des bouclettes dans le support en mousse et des pontages sur la structure.

## Claims

1. Device to embody a complex structural piece by a strip or wire contact placing on a form using one placing head mounted on a tool forming part of a wire distributing machine, said placing head being equipped with a plurality of rollers with at least one drive roller and one placing wheel, wherein the drive roller (12) of the wire (10) and the placing wheel (15) are interconnected by an intermediate gear (18) which may be retracted so as to disconnect them and wherein said placing head (1) is translation-mobile with respect to the distributing machine/head interface, complementary means (4) providing a variable pressure of the placing head on the form.

2. Device according to claim 1, wherein the placing wheel (15) is offset with respect to the axis of rotation of the placing head (1).

3. Device according to claim 1, wherein the wire (10) goes round the drive roller (12) against which it is plated by two presser rollers (13).

4. Device according to claim 1, wherein the drive roller (12) and the placing wheel (15) each respectively bear a gear (16) and another gear (17) driven by the intermediate gear (18).

5. Device according to claim 1 and 4, wherein the intermediate gear (18) moves on a ramp (19) under the action of a jack.

6. Device according to claim 1, wherein a rack (21) driven by a jack (22) is provided upstream of the presser roller so as to inject the wire.

7. Device according to claim 1, wherein a cutting blade (23) preferably moves in the same direction as the intermediate gear (18) between the placing wheel and the drive roller (12).

8. Device according to claim 1, wherein the distributing machine/head interface is constituted by a support plate (3) mounted in free rotation on the axis of the tool (5) forming part of the distributing machine.

9. Device according to claim 8, wherein the tool (5) is used as a support for a coil (6) distributing wire (10) which rotates freely on it and is equipped with an adjustable brake (8).

10. Device according to claims 1, 8 and 9, wherein the wire (10) emitted by the coil traverses the tool (5) through a central well so as to reach the placing head (1).

11. Device according to claims 1 and 8, wherein the complementary device is a spring (4) in support on the support plate (3) and placing head (1) so as to have the latter slide in the direction of the piece to be covered.

12. Method to embody a complex structure made of a composite material implementing the device according to claims 1 to 11 :
- embodying a elementary piece in two directions by the contact placing of a first layer of dry wire on a form coated with a binding agent, the first layer embodied being completed by at least another wire and binding agent layer placed in another direction until the thickness of the desired elementary piece is obtained,
- carrying out on the elementary piece a stitching of wires of the same type in a third direction prior to resin impregnation and hardening of the binding agent.

13. Method to embody a complex structure made of a composite material implementing the device according to claims 1 to 11 :
- embodying at least two pieces in two directions by placing a first layer of dry wire in contact on a form coated with a binding agent, the first layer embodied being completed by at least one other wire and binding agent placed in another direction until the thickness of the desired elementary pieces is obtained,
- superimposing the elementary pieces obtained on a foam support, and
- linking together the elementary pieces by the placing of wires of the same type in a third direction prior to resin impregnation and hardening of the binding agent.

14. Method according to claims 12 and 13, wherein the placing of wires in a third direction is ensured by the stitching of the wires forming plush loops in the foam support and couplings on the structure.

## Patentansprüche

1. Vorrichtung zur Herstellung eines Formteils mit komplexer Struktur durch Kontaktauflegen eines Fadens oder Bandes auf eine Form unter Verwendung eines Auflegekopfes, der auf einer Vorrichtung angebracht ist, die einen Teil einer Fadenverteilmaschine bildet, wobei der Auflegekopf mit einer Mehrzahl von Rollen ausgerüstet ist, unter denen sich wenigstens eine Antriebsrolle und ein Auflegeröllchen befinden, dadurch gekennzeichnet, daß die Antriebsrolle (12) des Fadens (10) und das Auflegeröllchen (15) durch ein zwischenliegendes Ritzel (18) miteinander gekoppelt sind, das zurückgezogen werden kann, um sie voneinander zu entkoppeln, und daß der Auflegekopf (1) bezüglich der Kopf-Verteilmaschinen-Schnittstelle translationsbeweglich ist, wobei ergänzende Mittel (4) einen variablen Druck des Auflegekopfes auf die Form zur Verfügung stellen.

2. Vorrichtung nach Anspruch 1, dadurch gekennzeichnet, daß das Auflegeröllchen (15) in bezug auf die Rotationsachse des Auflegekopfes (1) versetzt ist.

3. Vorrichtung nach Anspruch 1, dadurch gekennzeichnet, daß sich der Faden (10) um die Antriebsrolle (12) windet, gegen die er durch zwei Anpreßrollen (13) angelegt ist.

4. Vorrichtung nach Anspruch 1, dadurch gekennzeichnet, daß die Antriebsrolle (12) und das Auflegeröllchen (15) jede ein Ritzel (16) beziehungsweise ein Ritzel (17) tragen, die durch das zwischenliegende Ritzel (18) angetrieben werden.

5. Vorrichtung nach den Ansprüchen 1 und 4, dadurch gekennzeichnet, daß sich das zwischenliegende Ritzel (18) unter der Einwirkung eines Zylinders auf einer Rampe (19) verschiebt.

6. Vorrichtung nach Anspruch 1, dadurch gekennzeichnet, daß oberhalb der Anpreßrolle eine durch einen Zylinder (22) angetriebene Zahnstange (21) zur Einführung des Fadens vorgesehen ist.

7. Vorrichtung nach Anspruch 1, dadurch gekennzeichnet, daß sich ein Schneidmesser (23) vorzugsweise in der gleichen Richtung wie das zwischenliegende Ritzel (18) zwischen dem Auflegeröllchen und der Antriebsrolle (12) verschiebt.

8. Vorrichtung nach Anspruch 1, dadurch gekennzeichnet, daß die Kopf-Verteilmaschinen-Schnittstelle durch eine Tragplatte (3) gebildet wird, die frei drehbar auf der Achse der Vorrichtung (5) angebracht ist, die einen Teil der Verteilmaschine bildet.

9. Vorrichtung nach Anspruch 8, dadurch gekennzeichnet, daß die Vorrichtung (5) als Träger für ein Verteilerkops (6) für den Faden (10) dient, das sich frei um sich selbst dreht und das mit einer regelbaren Bremse (8) ausgerüstet ist.

10. Vorrichtung nach den Ansprüchen 1, 8 und 9, dadurch gekennzeichnet, daß der Faden (10), der von dem Kops abgegeben wird, die Vorrichtung (5) durch eine zentrale Bohrung durchquert, um den Auflegekopf (1) zu erreichen.

11. Vorrichtung nach den Ansprüchen 1 und 8, dadurch gekennzeichnet, daß das ergänzende Mittel eine auf der Tragplatte (3) und auf dem Auflegekopf (1) abgestützte Feder (4) ist, um diesen letzteren in Richtung des zu überziehenden Formteils gleiten zu lassen.

12. Verfahren zur Herstellung einer komplexen Struktur aus einem Verbundwerkstoff unter Verwendung der Vorrichtung nach den Ansprüchen 1 bis 11, bestehend aus:
- dem Herstellen eines elementaren Formteils mit zwei Richtungen durch kontaktierendes Auflegen einer ersten Schicht aus einem trockenen Faden auf eine mit einem Bindemittel bestrichene Form, wobei die auf diese Weise hergestellte erste Schicht durch wenigstens eine weitere Schicht aus Bindemittel und einem in einer anderen Richtung aufgelegten Faden bis zur Erzielung der gewünschten Dicke des elementaren Formteils vervollständigt wird,
- dem Ausführen einer Steppung aus Fäden der gleichen Art auf dem elementaren Formteil in einer dritten Richtung vor der Imprägnierung mit Harz und der Härtung des Bindemittels.

13. Verfahren zur Herstellung einer komplexen Struktur aus einem Verbundwerkstoff unter Verwendung der Vorrichtung nach den Ansprüchen 1 bis 11, bestehend aus:
- dem Herstellen von wenigstens zwei elementaren Formteilen mit zwei Richtungen durch kontaktierendes Auflegen einer ersten Schicht aus einem trockenen Faden auf eine mit einem Bindemittel bestrichene Form, wobei die auf diese Weise hergestellte erste Schicht durch wenigstens eine weitere Schicht aus Bindemittel und einem in einer anderen Richtung aufgelegten Faden bis zur Erzielung der gewünschten Dicke der elementaren Formteile vervollständigt wird,
- dem Übereinanderlegen der erhaltenen elementaren Formteile auf einem Schaumstoffträger und
- dem Verbinden der elementaren Formteile untereinander durch Anbringen von Fäden der gleichen Art in einer dritten Richtung vor der Imprägnierung mit Harz und der Härtung des Bindemittels.

14. Verfahren nach den Ansprüchen 12 und 13, dadurch gekennzeichnet, daß das Anbringen der Fäden in einer dritten Richtung durch Steppung von Fäden bewirkt wird, wodurch Fadenschlingen in dem Schaumstoffträger und Brücken auf der Struktur gebildet werden.
